# EUROPEAN PATENT APPLICATION

(11) **EP 1 170 888 A1**
(43) Date of publication of application: **09.01.2002**
(21) Application number: 00401941.0
(22) Date of filing: 06.07.2000
(51) Int. Cl.: H04B 10/17, H04J 14/02

(54) **Optical fiber raman amplifier gain equalisation**

(71) Applicant: ALCATEL, 75008 Paris (FR)
(72) Inventor: Hamoir, Dominique, 92120 Mountrouge (FR)
(74) Representative: Lamoureux, Bernard

(57) **Abstract**

The present invention provides an optical fiber Raman amplifier comprising input means and output means, an optical fiber path connecting signal-transmissively said input and output means, wherein said optical fiber path comprises a plurality of single stage Raman amplifiers, further comprising means for coupling at least one pump radiation wavelength with a wavelength less than a signal radiation wavelength into each single stage Raman amplifier, wherein each single stage Raman amplifier has an individual local gain signal, wherein means are provided for adding the local gain signals to yield an average gain signal. Furthermore, a method of actively equalizing a plurality of single Raman amplifiers without the use of costly multiplexing or filtering means is provided. Further, the present invention provides an optical transmission system comprising said optical fiber Raman amplifiers.

## Description

The present invention relates to an optical fiber Raman amplifier (FRA), an optical fiber communication system comprising such amplifiers and a method of equalizing optical fiber Raman amplifiers.

The transmission capacity of optical fibers is expected to advance in the future. The evolution of optical amplification is one of the technologies involved in this process. A key to this evolution is the availability of extremely-broad-band optical amplifiers, offering amplification over nearly all the transmission window allowed by silica. These requirements can be met inter alia by Raman amplification.

Raman amplification of a given signal wavelength allows to extend the transmission to wavelengths, which are not adressed by fibers doped with rare earth elements, for example erbium. This means, that Raman amplification opens the possibility to have optical transmission systems over a wide transmission wavelength window, for example from 1.25 µm to 1.7 µm.

Optical fiber Raman amplifiers (FRA) are well known and are known to be designed to operate at a desired wavelength between 1.25 µm and 1.7 µm. FRA utilize silica-based fibers and display a high transparency when unpumped. The working principle of FRA is based on stimulated Raman scattering as for example explained in the Ph.D. thesis of P. Riedel with the title "Untersuchungen zum künftigen Einsatz solitonengestützter faseroptischer Nachrichtenübertragung bei 1,3µm Wellenlänge", Hamburg 1998. For example, FRA can serve as a replacement for conventional repeaters or semiconductor-amplifiers or in combination with them.

It is highly desirable to obtain broadband Raman amplifiers for high-capacity optical transmission lines which have to yield a flat gain signal.

Y. Emori and S. Namiki disclose in OFC 99, PD19-1 to PD19-3 Raman amplifiers which are pumped and gain equalized by 12-wavelength-channel WDM high power laser diodes. Every laser has to be multiplexed by a 11-MZI-planar lightwave circuit (PLC) and individually power-supplied by means of a complicated controlling unit.

Therefore, the problem the present invention is to provide a FRA with a flat signal gain over a large bandwidth without the need for costly multiplexing or filtering and additionally power-supplying a plurality of pumping wavelengths.

This problem is solved by a FRA with the features of claim 1.

Accordingly, a FRA comprises input means and output means, an optical fiber path connecting signal-transmissively said input and output means, wherein said optical fiber path comprises a plurality of single stage Raman amplifiers, further comprising means for coupling at least one pump radiation wavelength with a wavelength less than a signal radiation wavelength into each single stage Raman amplifier, wherein each single stage Raman amplifier has an individual local gain signal, and wherein means are provided for adding the local gain signals to yield an average gain signal

This leads to a more facile equalization with less pumps as compare to the prior art equalization setups so that combining the local gains of each amplifier leads to a mean gain excursion which has a very flat gain which allows the construction of high capacity transmission lines without the use of highly complicated WDM and pumping means. A further advantage is that an amplifier according to the invention allows distributed Raman amplification in the transmission fiber, as well as localized Raman amplification.

Preferably, the amplifier further comprises at least one amplifying unit, where the plurality of single stage Raman amplifiers are subsequently arranged, leading to an easy to control multistage amplifier.

Advantageously, the amplifying unit further comprises wavelength selective means, which allows an easy addition of further amplfiers of different types or the integration of DCF and OADM means in the amplifying unit.

It is preferred that a plurality of wavelengths are coupled into each single stage Raman amplifier.

Preferably, each single Raman amplifier is coupled with at least one nonidentical wavelength from the plurality of pump radiation wavelengths, so that only multiplexing of a part of the plurality of wavelengths is necessary.

It is further preferred that the pump wavelengths are complementary.

In an advantageous embodiment, the single Raman amplifiers are alternatingly arranged.

It is further preferred that the plurality of single Raman amplifiers is split up in two identical groups of alternating amplifiers.

Advantageously, the two groups of alternating amplifiers are periodically inverted, or, in another preferred embodiment, the two groups are arranged in an inverted order. This leads to a better SNR (signal to noise ratio) compared to non inverted amplifiers.

Another problem of the invention was to provide a method for actively equalizing a plurality of Ramam amplifiers pumped by a plurality of pumping wavelengths without making use of costly multiplexing or filtering means.

This problem is solved by a method according to claim 15.

Accordingly, the local gain signals of each single stage amplifier are subjected to an addition process to yield an average gain signal. This leads to an excellent average or mean gain of all of the single stage Raman amplifiers without the need of costly multiplexing or filtering the pumping wavelengths.

Still another object of the present invention was to provide a optical fiber transmission system offering high capacity while offering simple system setup.

This object is solved by an optical transmission system according to claim 13.

Accordingly, an optical transmission system comprises a transmitter for signal radiation, a receiver for the signal radiation spaced apart from the transmitter and a transmission path connecting said transmitter and receiver comprising said optical Raman amplifier according to one of the preceding claims and further comprising a plurality of sources of pump radiation.

Preferably, the pump radiation wavelengths are in the range comprising 1.15 µm to 1.6 µm and the signal wavelength is in the range comprising 1.25 µm to 1.7 µm.

Further advantages of the present invention are explained in the following drawings.

It is understood that the aforementioned advantages and the features of the invention explained in the following, are not only used in the specifically described combination, but can also be used by a person skilled in the art in other combinations or alone, without exceeding the scope of the invention.

The invention is schematically explained in Figures 1 to 8 and is described in detail, where reference is made to the drawings.

Figure 1 shows schematically the prior art solution in multiplexing a plurality of pump wavelengths.

Figure 2 shows schematically the working principle of the method according to the invention.

Figures 3 to 8 show schematically further preferred embodiments of the invention.

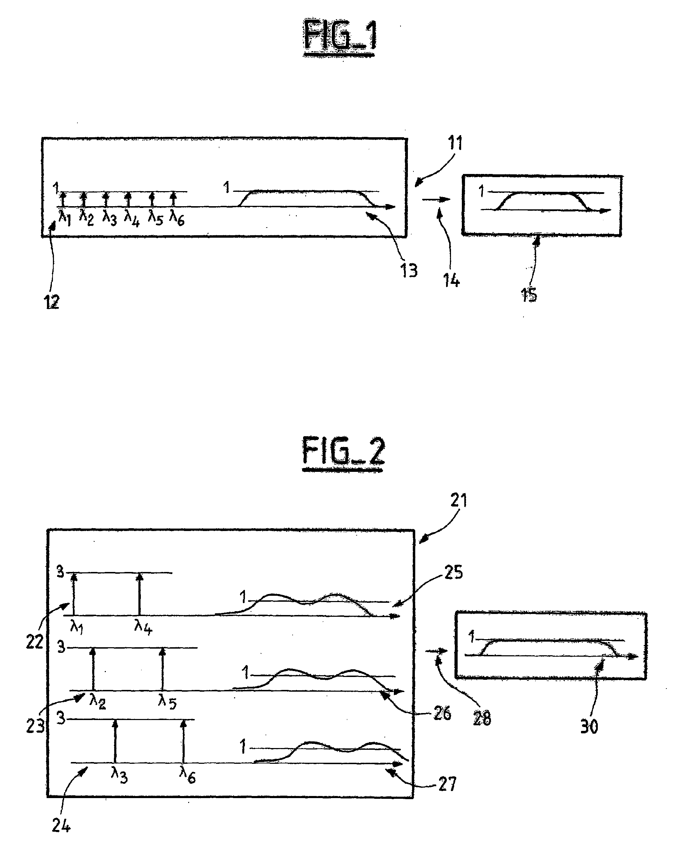

Fig. 1 visualizes schematically the prior art 11 in multiplexing the pump wavelengths 12 λ₁ to λ₆ of a large mumber of pump lasers for one FRA. The local gain 13 of one FRA is flat within 0.1 dB over a 90 nm band. Three FRA are combined along a transmission line, represented by arrow 14. They are passively equalized by using filters or actively equalized by wavelength-multiplexing for each FRA the pump wavelengths 12 λ₁ to λ₆ in order that each amplifier in the transmission line is identical. The average gain 15 of the aforementioned three FRA is also flat within 0.1 dB over a 90 nm band. The prior art discloses also wavelength multiplexing of up to 20 FRA each pumped by up to 40 pump wavelengths.

Fig. 2 visualizes schematically the method according to the invention. As an example, 3 FRA 22, 23, 24 are used, each pumped by two different wavelengths λ₁ and λ₄ for FRA 22, wavelengths λ₂ and λ₅ for FRA 23, wavelengths λ₃ and λ₆ for FRA 25. FRA 22 gives rise to the local gain 25, FRA 23 gives rise to the local gain 26, FRA 24 gives rise to the local gain 27. The local gains 25, 26, 27 are not flat within 0.1 dB over a 90 nm band. Alternating the FRA 22, 23, 24 along a transmission line 28 gives rise to the mean average gain 30 which is flat within 0.1 dB over a 90 nm band.

It is understood, that within the scope of the invention the number of pump wavelengths can be chosen deliberately by a person skilled in the art as well as the number of alternating amplifiers. For instance, alternating 8 different amplifiers with 4 pumps each, yields the same flatness of the average gain as with actively equalizing 8 prior art amplifiers each pumped by a 32 pump multiplex.

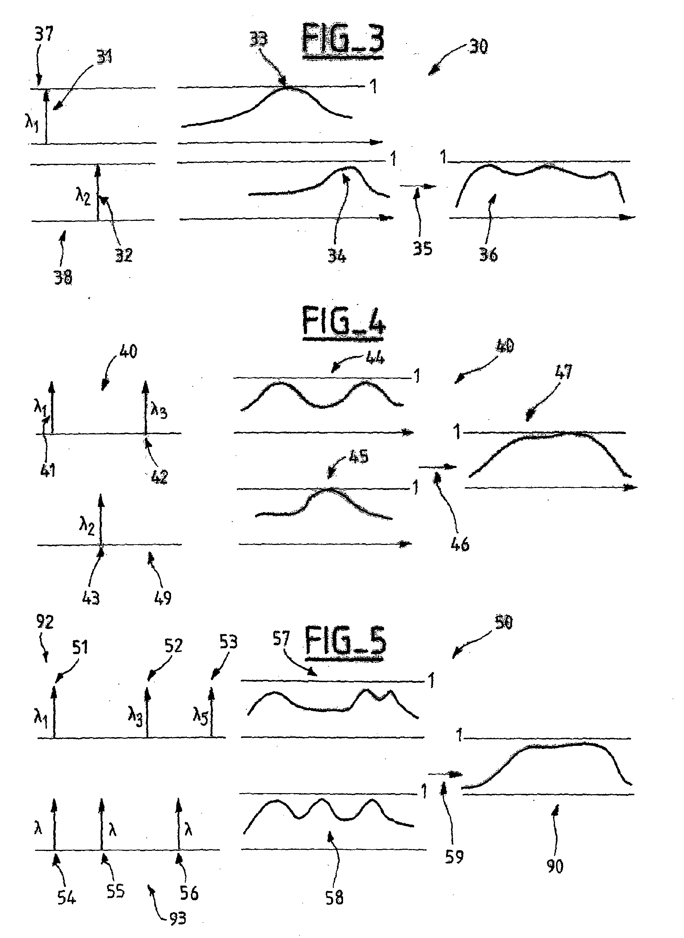

Figure 3 shows schematically the working principle of a FRA 30 according to the invention, where each of the two single stage Raman amplifiers 37, 38 is pumped by only one different wavelength 31 and 32. The local gains of each single stage amplifier 37 and 38 are visualized by numerals 33 and 34. After adding the local gains 33 and 34 via adding means 35, a good mean gain 36 of amplifier 30 is obtained. It is understood that the number of single stage Raman amplifiers may vary within the needs of the corresponding particular embodiment and that the number of single stage amplifiers is within the knowledge of a person skilled in the art. The same applies, if the amplifiers 31 and 32 or more are arranged subseqently in an amplifying unit or spaced apart along the transmission fiber. This embodiment of the invention is particularly useful, when using localized amplifiers with 2 or more stages and/or in the case of a weak transmission band which is 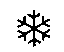 15 dB.

Figure 4 shows schematically the working principle of a FRA 40 according to the invention, wherein a first single stage amplifier 48 is pumped with the double number of wavelengths 41 and 42 than a second single stage amplifier 49. The wavelength 43 of the second amplifier 49 is arranged approximately between the wavelengths 41 and 42 of the first amplifier 48. It is understood, that the number of alternating amplifierts can be chosen deliberately according to the needs of a specific amplifier setup, as well as the particular number of pumping wavelengths, as long as the at least one number of pumping wavelengths is roughly the double number of the other number of pumping wavelengths. The individual gains 44 and 45 are the added via adding means 46 to give a flat mean signal 47. It is understood that the number of single stage Raman amplifiers may vary within the needs of the corresponding particular embodiment and that the number of single stage amplifiers is within the knowledge of a person skilled in the art. The same applies, if the amplifiers 48 and 49 or more are arranged subseqently in an amplifying unit or spaced apart along the transmission fiber.

Figure 5 shows schematically the working principle of another FRA 50 according to the invention. In this particular case, at least one wavelength 51, 54 of the pumping wavelengths 51 to 56 is repeated within the at least two single stage amplifiers 92 and 93. Both individual gains 57 and 58 are added via adding means 59 to give a flat mean signal 90. It is understood that the number of single stage Raman amplifiers may vary within the needs of the corresponding particular embodiment and that the number of single stage amplifiers is within the knowledge of a person skilled in the art. The same applies, if the amplifiers 92 and 93 or more are arranged subseqently in an amplifying unit or spaced apart along the transmission fiber. This setup is particularly preferred if the pumping power for lower wavelengths is weak. This may be caused by the socalled "Raman-tilt" which is transferring the energy of low wavelengths to higher ones

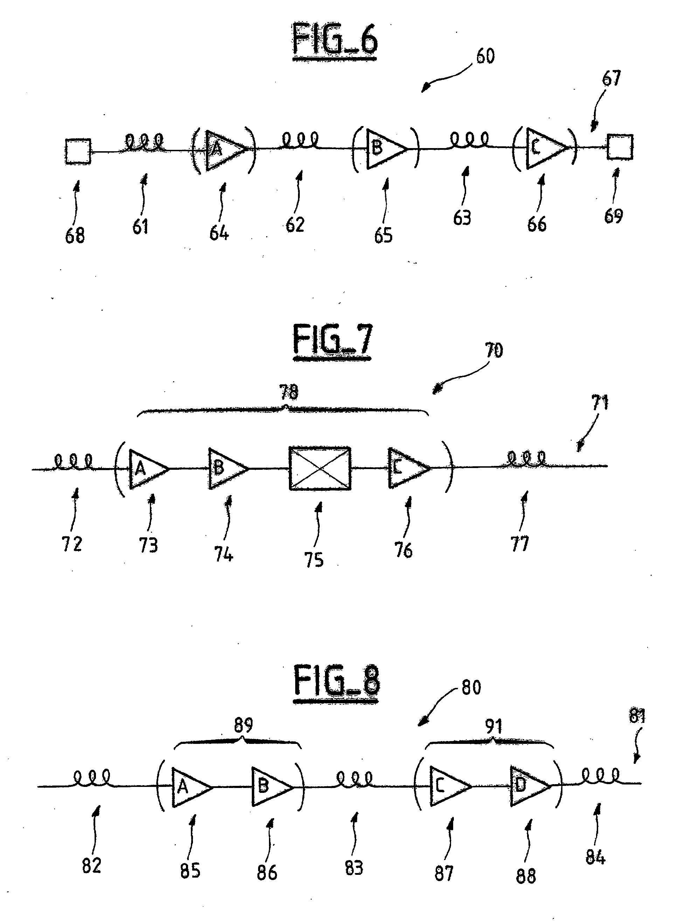

Figure 6 shows a simplified setup for an optical transmission device 60 according to the invention. The device 60 comprises a transmitter 68 and a receiver 69 known per se by a person skilled in the art. The device 60 further comprises three (or more) spans 61, 62, 63 comprising SMF and RDF fibers and arranged between each span single stage Raman amplifiers 64, 65 and 66. It is understood that the number of single stage Raman amplifiers and spans may vary within the needs of the corresponding particular embodiment and that the number of single stage amplifiers and spans are within the knowledge of a person skilled in the art if the specific arrangement as shown in figure 6 is observed. The same applies, if the amplifiers 64, 65 and 66 or more are arranged subseqently in an amplifying unit or spaced apart along the transmission fiber.

Figure 7 shows a further schematic embodiment of a device 70 according to the invention. The device 70 comprises inter alia a transmitter and a receiver known per se by a person skilled in the art, which are not shown in figure 7. Between two spans 72 and 77, an amplifying unit 78 is arranged. The amplifying unit 78 comprises single stage amplifiers 73, 74, 76. Between amplifiers 74 and 76, further means 75, like for example another amplifier, DCF or OADM means are arranged. The exact order of the arrangement of the amplifiers 73, 74, 76 and the further means 75 in the amplifying unit 78 is not important for the spirit of the invention as well as the number of single stage amplifiers and of the further means 75 in the amplifying unit 78. This applies also for the number of spans 72, 77 and amplifying units 78 which vary within the specific requirements for a device according to the invention.

Figure 8 shows a further schematic embodiment of a device 80 according to the invention. The device 80 comprises a transmitter and a receiver known per se by a person skilled in the art which are not shown in figure 8. The device 80 further comprises at least three (or more) spans 82, 83, 84 comprising SMF and RDF fibers. Between each span amplifying units 89 and 91 comprising each at least two amplifiers 85, 86 and 87, 88 are arranged. It is understood that the number of single stage Raman amplifiers may vary within the needs of the corresponding particular embodiment and that the number of single stage amplifiers is within the knowledge of a person skilled in the art.

The method of equalizing single stage Raman amplifiers according to the invention leads to an all-active equalization, where no equalizing filter leading to an extra gain loss due to the filters are needed.

Compared to prior art avtive equalization as shown in figure 1, the cost and the size of FRA according to the invention in the corresponding transmission lines are reduced, the Raman cross talk between the pumps is reduced because the pump band of each amplifier is reduced.

Futhermore, the efficiency of the transmission line is improved because each amplifier is multiplexed with less pumps than in prior art amplifiers.

In another exemplary embodiment, two series of an equal number of identical amplifiers are used, for example termed as ABCABC for two groups of three amplifiers. These are arranged in an inverted order. It is also possible to obtain this inversion in periodically inverting an arrangement of amplifiers as described in figure 2. This leads for rexample to a sequence ABCCBA which yields an even better SNR than non invertewd amplifiers according to the invention. It is understood, that the number of inverted amplifiers in each series can vary deliberately but should be more than two in each series.

The following table shows a comparison of the SNR between prior art amplifiers and ampliifers according to the invention.

**Table 1:**

| Comparison of SNR values of prior art amplifiers and amplifiers according to the invention. | |
|---|---|
| **amplifier** | **SNR(dB/ 0.2 nm)** |
| Actively equalized | 23.566 |
| Passively equalized | 23.533 |
| Erbium | 20.335 |
| alternating | 23.562 |

These values are based on a fiber length of 7000 km via 200 spans of 11 dB, wherein one span is a SMF and a RDF fiber

As can be seen the SNR of the alternating amplifier according of the invention is roughly the same as the more complicated setups for equalizing amplifiers in the prior art. The the SNR at the end of the transmission line remains nearly unaffected by the alternating arrangement of FRA according to the invention. An even better result can be obtained by inverting periodically the sequence of the plurality of FRA according to the invention.

## Claims

1. Optical fiber Raman amplifier comprising input means and output means, an optical fiber path connecting signal-transmissively said input and output means, wherein said optical fiber path comprises a plurality of single stage Raman amplifiers, further comprising means for coupling at least one pump radiation wavelength with a wavelength less than a signal radiation wavelength into each single stage Raman amplifier, wherein each single stage Raman amplifier has an individual local gain signal,
**characterized in, that**
means are provided for adding the local gain signals to yield an average gain signal.

2. Amplifier according to claim 1, **characterized in, that** the amplifier comprises at least one amplifying unit.

3. Amplifier according to claim 2, **characterized in, that** the plurality of single stage Raman amplifiers are subsequently arranged in said amplifying unit.

4. Amplifier according to claim 3, **characterized in, that** the amplifying unit further comprises wavelength selective means.

5. Amplifier according to one of the preceding claims, chracterized in, that a plurality of wavelengths are coupled into each single stage Raman amplifier.

6. Amplifier according to claim 5, **characterized in, that** each single Raman amplifier is coupled with at least one nonidentical wavelength from the plurality of pump radiation wavelengths.

7. Amplifier according to claim 5 or 6, **characterized in, that** means are provided which enable to couple each wavelength of the plurality of wavelengths at least once to each of the single Raman amplifiers.

8. Amplifier according to one of the preceding claims, **characterized in, that** the pump wavelengths are complementary.

9. Amplifier according to claim 8, **characterized in, that** the single Raman amplifiers are alternatingly arranged.

10. Amplifier according to claim 9, **characterized in, that** the plurality of single Raman amplifiers is split up in two identical groups of alternating amplifiers.

11. Amplifier according to claim 10, **characterized in, that** the groups are periodically inverted.

12. Amplifier according to claim 10, **characterized in, that** the two groups of alternating amplifiers are arranged in an inverted order.

13. Optical transmission system comprising a transmitter for signal radiation , a receiver for the signal radiation spaced apart from the transmitter and a transmission path connecting said transmitter and receiver, further comprising said optical Raman amplifier according to one of the preceding claims and further comprising a plurality of sources of pump radiation.

14. Optical transmission system according to claim 13, **characterized in, that** the pump radiation wavelengths are in the range comprising 1.15 µm to 1.60 µm and the signal wavelength is in the range comprising 1.25 µm to 1.7 µm.

15. Method for equalizing a plurality of optical fiber single stage Raman amplifiers, **characterized in, that** the local gain signals of each single stage amplifier are subjected to an addition process to yield an average gain signal.
